# EUROPÄISCHE PATENTANMELDUNG

(11) **EP 1 452 465 A1**
(43) Veröffentlichungstag der Anmeldung: **01.09.2004**
(21) Anmeldenummer: 04090063.1
(22) Anmeldetag: 23.02.2004
(51) Int. Cl.: B65G 17/00, B65G 21/22, B65G 35/06, B64F 1/36

(54) **Fördersystem für Behälter, insbesondere eine Flughafen-Gepäckförderanlage**

(30) Priorität: 27.02.2003 DE 10308657; 04.04.2003 DE 10315404
(71) Anmelder: SIEMENS AKTIENGESELLSCHAFT, 80333 München (DE)
(72) Erfinder: Brixius, Wolfgang, 91077 Neunkirchen A. Br. (DE); Gräfer, Dominik, 44265 Dortmund-Wellinghofen (DE); Hoene, Albrecht, Dr., 93138 Lappersdorf (DE)

(57) **Zusammenfassung**

Die Erfindung betrifft ein Fördersystem für Behälter (2), insbesondere eine Flughafen-Gepäckförderanlage,
mit einem Kurvenförderer (1), der an einem Ende seiner Förderbahnkurve einen Behältereinförderbereich (3) und am anderen Ende einen Behälterausförderbereich (4) umfasst, und
mit einer Behältervortriebseinrichtung (5), welche die Behälter (2) entlang der Förderbahn bewegt. Um ein Fördersystem mit Kurvenförderern (1) zu schaffen, bei dem das zu transportierende Gut seine Position innerhalb des Behälters (2) bei Kurvendurchfahrten beibehält, auch wenn das Gut nur auf dem Behälterboden liegt, wird vorgeschlagen dass die Behälter (2) zur Verringerung der Fliehkraftwirkung den Kurvenbereich nach innen geneigt durchlaufen.

## Beschreibung

Die Erfindung betrifft ein Fördersystem für Behälter, insbesondere eine Flughafen-Gepäckförderanlage, gemäß dem Oberbegriff des Anspruchs 1.

Flughafen-Gepäckförderanlagen sind bekannt. Es handelt sich dabei um Fördersysteme für Behälter, die zumindest einen Kurvenförderer umfassen. Ein Kurvenförderer weist an einem Ende seiner Förderbahnkurve einen Einförderbereich und am anderen Ende einen Ausförderbereich auf. Zur Bewegung der Behälter durch den Kurvenbereich ist eine Vortriebseinrichtung vorhanden, die den Behälter entlang der Förderbahn bewegt. Eine solche Einrichtung kann beispielsweise aus einem Förderband bestehen, auf dem der Behälter mit einer Seitenkante aufliegt.

Der Nachteil der bekannten Fördersysteme mit Kurvenförderern besteht darin, dass sich das Schütt- oder Stückgut bei der Kurvendurchfahrt im Transportbehälter verschieben und seine Position innerhalb des Transportbehälters ändern kann.

Die Aufgabe der Erfindung ist es, ein Fördersystem mit Kurvenförderern zu schaffen, bei dem das zu transportierende Gut im Transportbehälter seine Position innerhalb des Behälters bei Kurvendurchfahrten beibehält, auch wenn das Gut nur auf dem Behälterboden liegt.

Die Lösung dieser Aufgabe ist durch die im Anspruch 1 angegebenen Merkmale gegeben. Durch die kennzeichnenden Merkmale der Unteransprüche ist das Fördersystem in vorteilhafter Weise weiter ausgestaltet.

Die Lösung sieht vor, dass die Behälter zur Verringerung der Fliehkraftwirkung den Kurvenbereich nach innen geneigt durchlaufen. Die Neigung wird dabei so gewählt, dass es zu keiner Verschiebung des Gutes innerhalb des Behälters kommt.

Eine einfache Ausführung sieht vor, dass im Kurvenbereich die außenliegende Seite der Behälter gegenüber der innenliegenden Seite angehoben ist.

Ein störungsfreies Anheben ergibt sich, wenn das Anheben jeweils mittels eines Laufwagens erfolgt, der auf einer außenliegenden Fahrschiene geführt ist.

Zweckmäßiger Weise wird der Laufwagen im Einförderbereich jeweils mit einem Behälter lösbar verbunden, zusammen mit diesem von der Vortriebseinrichtung durch den Kurvenbereich bewegt und die Verbindung im Ausförderbereich wieder gelöst.

Konstruktiv einfach ist es, wenn der Laufwagen zur lösbaren Verbindung in eine Aussparung des Behälters eingreift.

Um mit geringem Aufwand kontinuierlich Durchfahrten sicherzustellen, werden die Laufwagen mit Hilfe von Rückführmitteln zum Einförderbereich zurückgebracht.

Die Rückführung der Laufwagen erfolgt mittels einer weiteren unterhalb der Förderbahn angeordneten Laufschiene und mittels eines die Laufwagen wieder nach oben in den Einförderbereich bewegenden Positionierelement, um mit relativ wenigen einfachen Laufwagen auszukommen.

Von Vorteil ist es, wenn diese weitere Laufschiene schräg angeordnet ist, so dass die Laufwagen aufgrund ihres Gewichts selbsttätig zum Einförderbereich zurückrollen.

Zur Beförderung der Laufwagen in den Einförderbereich wird vorgeschlagen, dass das radförmig ausgebildete Positionierelement die Laufwagen nach Art eines miniaturisierten Riesenradkarussells mit einhängbaren Gondeln auf seinem Außenumfang nach oben trägt und einen Formschluss mit den Stückgutbehältern herstellt.

Alternativ kann das Anheben auch mittels in entsprechender Höhe angeordneter Schienen erfolgen, auf denen die außenliegende Seite des Behälters abgestützt aufliegt.

Ohne weitere Hilfsmittel kommt man aus, wenn die Schienen als Gleitschienen ausgebildet sind.

Ein unerwünschtes Verkippen der Behälter wird vermieden, wenn die Gleitschienen im Einförderbereich und im Ausförderbereich versetzte Rampen bilden, mit deren Hilfe die angetriebenen Behälter bei Aufgabe auf der Außenseite auf Schienenhöhe angehoben und vor Abgabe wieder in die horizontale Lage abgesenkt werden. Die versetzten Rampen, welche in Förderrichtung um etwa eine Behälterlänge versetzt sind, sorgen für ein paralleles Anheben der Behälteraußenseite.

Zweckmäßiger Weise liegen die Behälter mit der Bodenunterseite auf den Gleitschienen auf.

Alternativ ist es auch möglich, das die Behälter einen nach außen gerichteten Vorsprung aufweisen, der jeweils auf der Gleitschiene aufliegt.

Die Erfindung wird nachfolgend anhand einer Zeichnung näher beschrieben. Es zeigen:
- Fig. 1: einen Kurvenförderer mit zwei Behältern und Laufwagenführung,
- Fig. 2: den Behältereinförderbereich gemäß Fig. 1 in einer vergrößerten Darstellung,
- Fig. 3: einen Kurvenförderer mit Schienen zum Anheben der Behälter und
- Fig. 4: den Kurvenförderer gemäß Fig. 3 mit hochgestelltem Behälter aus einer anderen Blickrichtung.

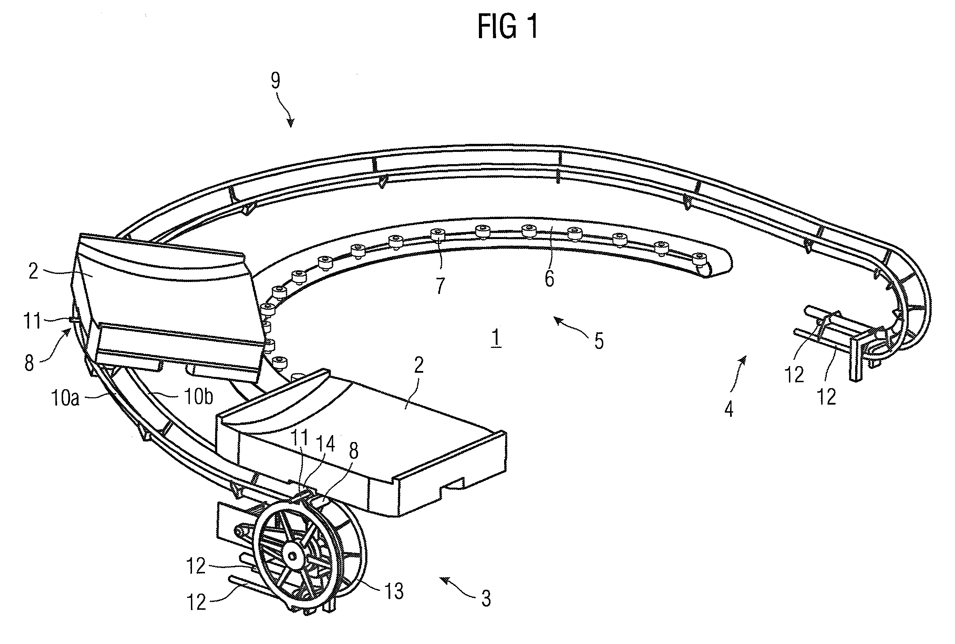

Fig. 1 zeigt einen Kurvenförderer 1 eines Fördersystems für Behälter 2 für Stückgüter oder auch Schüttgut, die sich entlang der Pfeilrichtung bewegen. Der Kurvenförderer 1 weist an einem Ende seiner kurvenförmigen Förderbahn einen Behältereinförderbereich 3 und am anderen Ende einen Behälterausförderbereich 4 auf. Zum Antrieb der Behälter 2 ist eine Behältervortriebseinrichtung 5 in Form eines Förderbands 6 vorgesehen, auf dem eine Behälterseite (in Fig. 1 jeweils die rechte Seite) aufliegt. Zur Führung der Behälter 2 sind am Förderband 6 freidrehbar gelagerte Führungsrollen 7 an der Innenseite des Förderbandbogens angeordnet. Die Behälter 2 stützen sich über einen Laufwagen 8 an einer Schienenkonstruktion 9 ab, die aus zwei Laufschienen 10a, 10b gebildet ist.

Die Schienenkonstruktion 9 ist oberhalb des Förderbands 6 angeordnet, so dass die Behälter 2 im Kurvenbereich nach innen geneigt sind. Zur Erzielung einer Dreipunktauflage stützt sich der Behälter 2 auf der Innenseite am Förderband 6 und auf der Außenseite an der Stützstange 11, die am Laufwagen 8 befestigt ist, ab.

Im Behälterausförderbereich 4 trennt sich der Laufwagen 8 aus der formschlüssigen Verbindung mit dem Behälter 2 und taucht nach unten ab. Dann werden die Laufwagen 8 mittels weiteren unterhalb des Förderbands 6 und damit der Förderbahn angeordneten Laufschienen 12 wieder zurückgeführt. Von den Laufschienen 12 ist in Fig. 1 der Übersichtlichkeit halber nur ein kurzes Stück gezeigt; sie enden im Behältereinförderbereich 3. Die Laufschienen 12 weisen zum Einförderbereich 3 hin eine Neigung oder Schräge auf, so dass sie aufgrund ihres Gewichts selbsttätig zu diesem zurückrollen (nicht gezeigt). Die Laufschienen 12 bilden hier Rückführmittel. Die Rückführung des Laufwagen 2 kann auch mittels eines Reibriemens erfolgen.

Mittels eines Positionierelements 13 werden die Laufwagen 8 wieder nach oben unter einen der Behälter 2 geführt.

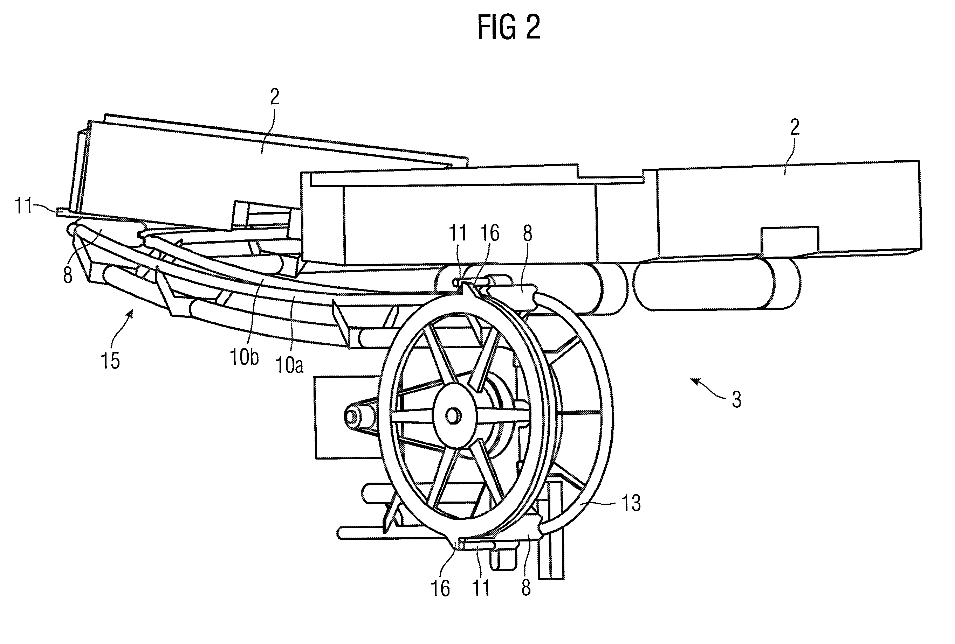

In Fig. 2 sind das Positionierelement 13 und die beiden Behälter 2 aus Fig. 1 in einer vergrößerten Darstellung aus einer anderen Blickrichtung gezeigt. Das Positionierelement 13 ist nach Art eines miniaturisierten Riesenrads mit einhängbaren Gondeln aufgebaut, wobei die "Laufwagen-Gondeln" am Außenumfang eingehängt und nach oben getragen werden. Oben werden die Laufwagen 8 lösbar mit den Behältern 2 verbunden, indem sie in eine Aussparung 14 (s. Fig. 1) des Behälters 2 eingreifen und dann vom angetriebenen Behälter 2 mitgezogen werden.

Fig. 2 zeigt weiter, dass im Einförderbereich 3 auf der außenliegenden Seite der Schienenkonstruktion 9 eine Steigung 15 vorgesehen ist, um die außenliegende Seite der Behälter 2 gegenüber der innenliegenden anzuheben.

Die dem Einförderbereich 3 zugeführten Behälter 2 können sich in einer Warteschlange befinden. Sie werden dann mittels einer Klinke 16 in die Übernahmeposition gebracht, in der sie mit einem der Laufwagen 8 lösbar verbunden werden. In dieser Position befindet sich der obere Teil des Laufwagens 8 in der Aussparung 14 im Boden des Behälters 2, etwa in der Mitte der Behälterlängsseite.

Ab dieser Position ist der Laufwagen 8 entlang der Förderbahn frei verschiebbar.

Anstelle der Führungsrollen 7 kann ein angetriebenes Vertikalband zur Unterstützung der Vortriebseinrichtung 5 verwendet werden, welches mit gleicher Geschwindigkeit und in gleicher Richtung wie das Förderband 6 bewegt wird. Die Behältervortriebseinrichtung kann sowohl mittels Reibschluss als auch mittels Formschluss (nicht gezeigt) realisiert werden.

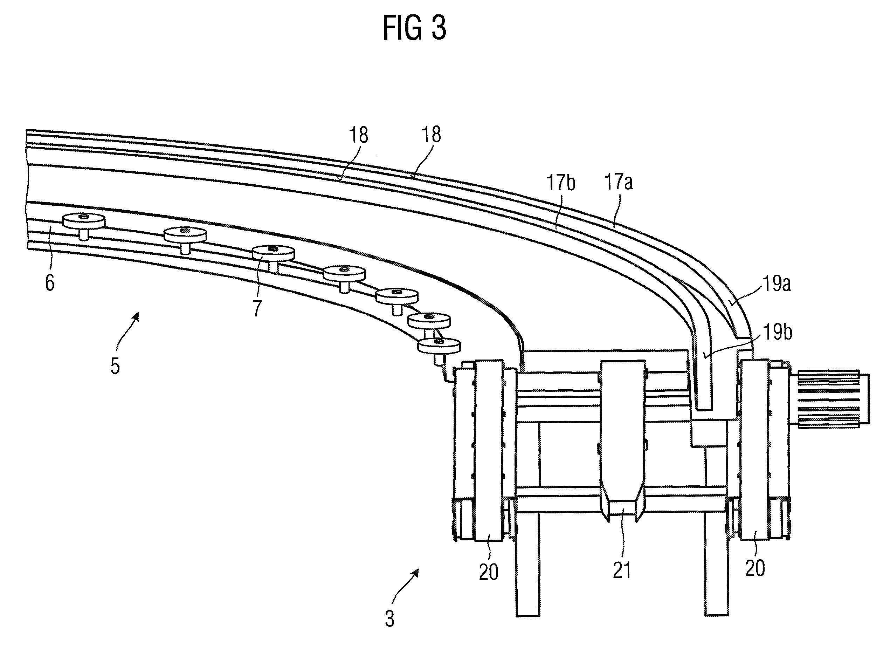

Fig. 3 zeigt eine alternative Ausführungsform für das Anheben der außenliegenden Seite der Behälter 2. Wie Fig. 3 erkennen lässt, sind außen entlang der Förderbahnkurve zwei Schienen 17, eine außenliegende Schiene 17a und eine innenliegende Schiene 17b als Gleitschienen vorgesehen, deren
Behälterauflageflächen 18 oberhalb des Förderbands 6 liegen.

Die Schienen 17 weisen im Eingangsbereich der Förderbahnkurve in Bewegungsrichtung der Behälter 2 versetzte Rampen 19 auf, wobei die Rampe 19b der innenliegenden Schiene 17b vor der außenliegenden Rampe 19a beginnt.

Das Einfördern des Behälters erfolgt mittels zweier Förderbänder 20, auf denen die Behälter 2 aufliegend vom Förderband 6 übernommen werden. Zur Führung der Behälter 2 dient ein Führungsprofil 21.

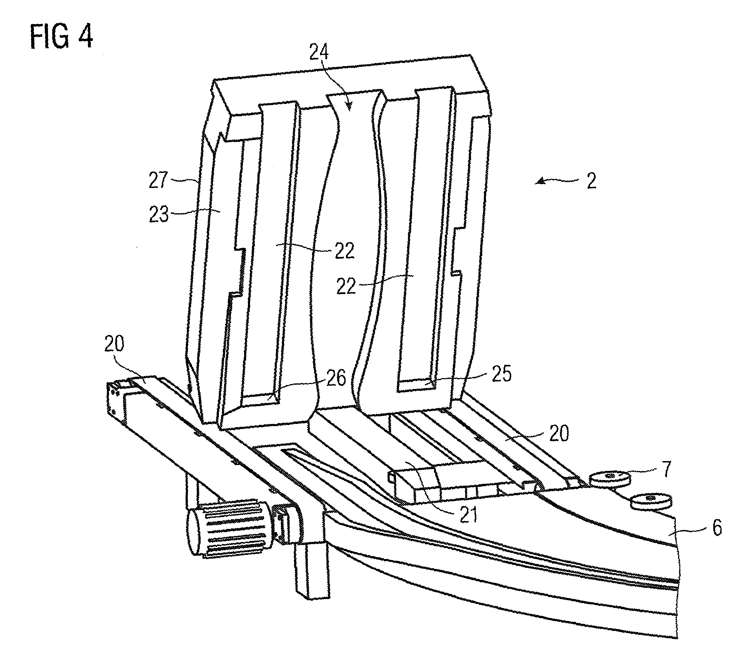

Fig. 4 zeigt den Einförderbereich gemäß Fig. 3 aus einer anderen Blickrichtung mit zum besseren Verständnis hochgestellten Behälter 2. Man schaut in Fig. 4 direkt auf die Behälterunterseite, wo Aussparungen 22, 23, 24 sowie Flächen 25, 26 angeordnet sind. Die Aussparungen 22, 23 und die Flächen 25, 26 sind so ausgeführt, dass der Behälter 2 auf der außenliegenden Seite gleichmäßig angehoben wird, d.h. die Außenkante 27 des Behälters 2 verläuft jeweils waagerecht.

## Patentansprüche

1. Fördersystem für Behälter, insbesondere eine Flughafen-Gepäckförderanlage,
mit einem Kurvenförderer, der an einem Ende seiner Förderbahnkurve einen Behältereinförderbereich und am anderen Ende einen Behälterausförderbereich umfasst, und
mit einer Behältervortriebseinrichtung, welche die Behälter entlang der Förderbahn bewegt,
**dadurch gekennzeichnet,**
**dass** die Behälter (2) zur Verringerung der Fliehkraftwirkung den Kurvenbereich nach innen geneigt durchlaufen.

2. Fördersystem nach Anspruch 1,
**dadurch gekennzeichnet,**
**dass** im Kurvenbereich die außenliegende Seite der Behälter (2) gegenüber der innenliegenden Seite angehoben ist.

3. Fördersystem nach einem der Ansprüche 1 oder 2,
**dadurch gekennzeichnet,**
**dass** das Anheben jeweils mittels eines Laufwagens (8) erfolgt, der auf einer außenliegenden Fahrschiene (10a) geführt ist.

4. Fördersystem nach Anspruch 3,
**dadurch gekennzeichnet,**
**dass** der Laufwagen (8) im Behältereinförderbereich (3) jeweils mit einem Behälter (2) lösbar verbunden, zusammen mit diesem von der Behältervortriebseinrichtung (5) durch den Kurvenbereich bewegt und die Verbindung im Behälterausförderbereich (4) wieder gelöst wird.

5. Fördersystem nach einem der Ansprüche 3 oder 4,
**dadurch gekennzeichnet,**
**dass** der Laufwagen (8) zur lösbaren Verbindung in eine Aussparung (14) des Behälters (2) eingreift.

6. Fördersystem nach einem der Ansprüche 3 bis 5,
**dadurch gekennzeichnet,**
**dass** die Laufwagen (8) mit Hilfe von Rückführmitteln zum Behältereinförderbereich (3) zurückgeführt werden.

7. Fördersystem nach Anspruch 6,
**dadurch gekennzeichnet,**
**dass** die Rückführung der Laufwagen (8) mittels einer weiteren unterhalb der Förderbahn angeordneten Laufschiene (12) und mittels eines die Laufwagen (8) wieder nach oben in den Behältereinförderbereich (3) bewegenden Positionierelements (13) erfolgt.

8. Fördersystem nach Anspruch 7,
**dadurch gekennzeichnet,**
**dass** diese weitere Laufschiene (12) schräg angeordnet ist, so dass die Laufwagen (8) aufgrund ihres Gewichts selbsttätig zum Behältereinförderbereich (3) zurückrollen.

9. Fördersystem nach Anspruch 7,
**dadurch gekennzeichnet,**
**dass** das radförmig ausgebildete Positionierelement (13) die Laufwagen (8) nach Art eines miniaturisierten Riesenradkarussells mit einhängbaren Gondeln auf seinem Außenumfang nach oben trägt und einen Formschluss mit den Behältern (2) herstellt.

10. Fördersystem nach Anspruch 2,
**dadurch gekennzeichnet,**
**dass** das Anheben mittels in entsprechender Höhe angeordneter Schienen (17a, 17b) erfolgt, auf denen die außenliegende Seite des Behälters (2) abgestützt ist.

11. Fördersystem nach Anspruch 10,
**dadurch gekennzeichnet,**
**dass** die Schienen (17) als Gleitschienen ausgebildet sind.

12. Fördersystem nach Anspruch 11,
**dadurch gekennzeichnet,**
**dass** die Gleitschienen (17) im Behältereinförderbereich (3) und Behälterausförderbereich (4) Rampen (19) bilden, mit deren Hilfe die angetriebenen Behälter (2) bei Aufgabe auf der Außenseite auf Schienenhöhe angehoben und vor Abgabe wieder in die horizontale Lage abgesenkt werden.

13. Fördersystem nach einem der Ansprüche 10 bis 12,
**dadurch gekennzeichnet,**
**dass** die Behälter (2) mit der Bodenunterseite auf den Gleitschienen (17)aufliegen.

14. Fördersystem nach einem der Ansprüche 10 bis 13,
**dadurch gekennzeichnet,**
**dass** die Behälter (2) einen nach außen gerichteten Vorsprung aufweisen, der jeweils auf den Gleitschienen (17)aufliegt.
